# EUROPÄISCHE PATENTSCHRIFT

(11) **EP 2 467 390 B1**
(45) Veröffentlichungstag und Bekanntmachung des Hinweises auf die Patenterteilung: **02.10.2013**
(21) Anmeldenummer: 10751842.5
(22) Anmeldetag: 12.08.2010
(51) Int. Cl.: C07F 7/12, B01J 23/06, B01J 23/80, C01B 33/107

(54) **KATALYSATOR ZUR HYDRODECHLORIERUNG VON CHLORSILANEN ZU HYDROGENSILANEN UND VERFAHREN ZUR DARSTELLUNG VON HYDROGENSILANEN MIT DIESEM KATALYSATOR**
CATALYST FOR HYDRODECHLORINATION OF CHLOROSILANES TO HYDROGEN SILANES AND METHOD FOR IMPLEMENTING HYDROGEN SILANES USING SAID CATALYST
CATALYSEUR D'HYDRODÉCHLORATION DE CHLOROSILANES EN HYDROGÉNOSILANES ET PROCÉDÉ DE PRÉPARATION D'HYDROGÉNOSILANES AU MOYEN DE CE CATALYSEUR

(30) Priorität: 19.08.2009 DE 102009028653
(43) Veröffentlichungstag der Anmeldung: 27.06.2012
(73) Patentinhaber: Wacker Chemie AG, 81737 München (DE)
(72) Erfinder: ZIPP, Alexander, 81379 München (DE); EBERLE, Hans-Jürgen, 81477 München (DE)
(74) Vertreter: Fritz, Helmut
(86) Internationale Anmeldenummer: PCT/EP2010/061780
(87) Internationale Veröffentlichungsnummer: WO 2011/020773

(56) Entgegenhaltungen:
- EP-A1- 0 661 288
- EP-A2- 0 068 603
- EP-A2- 0 714 900
- WO-A1-2005/068077

## Beschreibung

Die Erfindung betrifft ein Verfahren zur Herstellung von Hydrogensilanen durch katalytische Hydrierung von Chlorsilanen mit Wasserstoffgas in Gegenwart eines heterogenen Katalysators auf Basis von metallischem Zink sowie den Katalysator.

Das erfindungsgemäße Verfahren ist beispielsweise geeignet zur Hydrodechlorierung des bei der Darstellung von reinem Silizium in großer Menge anfallenden Tetrachlorsilans zu Trichlorsilan, wobei dieses beispielsweise erneut für die Abscheidung von Silizium eingesetzt oder durch das erfindungsgemäße Verfahren weiter zu seinen Homologen Dichlorsilan, Chlorsilan und Monosilan umgesetzt werden kann.

Eine andere Anwendung des erfindungsgemäßen Verfahrens ist beispielsweise die Darstellung von Hydrogenalkylchlorsilanen aus Alkylchlorsilanen. Bei dem als Müller-Rochow-Prozess bekannten Verfahren zur Herstellung von Methylchlorsilanen wird Methylchlorid mit elementarem Silicium umgesetzt. Dabei wird ein Gemisch aus Silanen erhalten, das neben den Chlorsilanen wie z.B. Methyltrichlorsilan, Dimethyldichlorsilan unter anderem auch Hydrogensilane wie Methyldichlorsilan und Dimethylchlorsilan enthält. Diese Hydrogensilane sind von großem Interesse, da sie z.B. durch Hydrosilylierungsreaktionen zu weiteren organofunktionellen Silanen umgewandelt werden können. Da die Hydrogensilane bei der Müller-Rochow-Synthese lediglich als Koppelprodukte auftreten, ist deren Verfügbarkeit stark limitiert. Von Interesse ist daher die gezielte und vom Müller-Rochow-Prozess entkoppelte Umwandlung der Chlorsilane in Hydrogensilane.

Zur Darstellung von Hydrogensilanen aus Chlorsilanen sind verschiedene Verfahren bekannt.

Die Hydrodechlorierung hochreinen Tetrachlorsilans erfolgt üblicherweise gemäß Stand der Technik durch thermische Konvertierung bei sehr hohen Temperaturen.

So beschreibt US3933985 die Umsetzung von Tetrachlorsilan mit Wasserstoff zu Trichlorsilan bei Temperaturen im Bereich von 900°C bis 1200°C und mit einem Molverhältnis H₂:SiCl₄ von 1:1 bis 3:1. Es werden Ausbeuten von 12 - 13 % beschrieben.

In dem Patent US4217334 wird über ein optimiertes Verfahren zur Umwandlung von Tetrachlorsilan in Trichlorsilan mittels der Hydrierung von Tetrachlorsilan mit Wasserstoff in einem Temperaturbereich von 900°C bis 1200°C berichtet. Durch ein hohes Molverhältnis H₂:SiCl₄ (bis 50:1) und einer Flüssigkeitsquenche des heißen Produktgases unter 300°C werden deutlich höhere Trichlorsilanausbeuten erzielt (bis ca. 35 % bei H₂ : Tetrachlorsilan 5 : 1). Nachteil dieses Verfahrens ist der deutlich höhere Wasserstoffanteil im Reaktionsgas sowie die angewendete Quenche mittels einer Flüssigkeit, was beides den energetischen Aufwand des Verfahrens und damit die Kosten stark erhöht.

Neben diesen rein thermischen Verfahren sind weiterhin Umsetzungen mit literaturbekannten komplexen Metallhydriden wie beispielsweise Natrium- oder Lithiumaluminiumhydrid und insbesondere stöchiometrische Umsetzungen mit unedlen Metallen bekannt.

So wird in US5329038 ein Verfahren beschrieben, bei dem Hydrogensilane aus Chlorsilanen durch Umsetzung mit einer Wasserstoffquelle und Aluminium als Chloridfänger in Gegenwart eines Katalysators aus der Gruppe Kupfer, Zink oder Zinn erhalten werden, wobei das Aluminium stöchiometrisch eingesetzt werden muss und das entsprechende Aluminiumchlorid als Koppelprodukt anfällt.

Ein ähnliches Verfahren beschreibt US2406605, wobei hier die Umsetzung mit stöchiometrischen Mengen Aluminium, Magnesium oder Zink ohne Katalysator aber ebenfalls unter Anfall äquimolarer Mengen der entsprechenden Chloride erfolgt.

EP0412342 beschreibt ein Verfahren, bei dem fein verteiltes Aluminium in einer Salzschmelze aus Aluminium- und Natriumchlorid mit Wasserstoff zum Hydrid umgesetzt und dieses unter Verbrauch zur Umsetzung halogensubstituierter Verbindungen der 2. bis 4. Periode in die entsprechend hydrierten Verbindungen genutzt wird.

In EP0714900 wird ein Verfahren beschrieben, bei dem Chlorsilane zusammen mit Wasserstoff an heterogenen Katalysatoren bestehend aus einem Metall aus der Reihe Ruthenium, Rhodium, Palladium, Osmium, Iridium und Platin auf einem Trägermaterial zu den entsprechend hydrierten Derivaten umgesetzt werden.

Allen diesen bekannten Verfahren ist gemein, dass sie bei sehr hohen Temperaturen arbeiten oder der Einsatz stöchiometrischer Mengen an Chloridfängern bzw. die anfallenden Koppel- und Nebenprodukte oder die Verwendung verfahrenstechnisch problematischer Metall- und Salzschmelzen die Verfahren unökonomisch machen oder insbesondere im Falle stöchiometerischer Reaktionen signifikante Mengen an Nebenprodukten gebildet werden.

In EP 0 068 603 A2 und WO 2005/068077 A1 sind Katalysatoren beschrieben, die Zink auf einem Träger basierend auf Metalloxid enthalten. In EP 0 068 603 A2 wird amorphe Kieselsäure eingesetzt, die als Kieselgel bezeichnet wird. Diese wird durch Fällung von Wasserglas hergestellt. In WO 2005/068077 A1 wird SiO₂ als Träger genannt.

In EP 0 661 288 A1 werden Chlorsilane mit Aluminium und Wasserstoffgas als Reduktionsmittel reduziert. Aluminium wird dabei verbraucht und es entsteht Aluminiumchlorid.

Es bestand nun die Aufgabe den Stand der Technik zu verbessern und insbesondere, ein wirtschaftliches und universell anwendbares Verfahren zu entwickeln, das eine heterogen katalysierte Hydrodechloricrung von Chlorsilanen mit molekularem Wasserstoff in technisch handhabbaren Temperaturbereich gestattet.

Überraschenderweise wurde gefunden, dass Hydrcgensilane bei der Umsetzung von beliebigen Chlorsilanen mit Wasserstoffgas in Gegenwart einer katalytischen Menge elementaren Zinks in einem Träger aus Metalloxid bei erhöhter Temperatur erhalten werden können.

Gegenstand der Erfindung ist somit ein Verfahren zur Herstellung von Hydrogensilanen der allgemeinen Formel

RₙCl₃₋ₙSiH

durch Umsetzung von Chlorsilanen, die ausgewählt werden aus Tetrachlorsilan und Chlorsilanen der allgemeinen Formel

RₙCl₄₋ₙSi

wobei R in beiden Formeln gleichzeitig und unabhängig voneinander ein Wasserstoffatom, ein gegebenenfalls substituierter oder unsubstituierter Kohlenwasserstoffrest mit 1 bis 18 Kohlenstoffatomen, bevorzugt ein gegebenenfalls substituierter oder unsubstituierter Alkyl- oder Arylrest mit vorzugsweise mit 1 bis 18 Kohlenstoffatomen, bevorzugt mit 1 bis 12 Kohlenstoffatomen, weiter bevorzugt mit 1 bis 8 Kohlenstoffatomen, besonders bevorzugt Methyl-, Phenyl- oder Ethylrest bedeutet und n die Werte von 1-3 annehmen kann, mit Wasserstoffgas in Gegenwart einer Katalytischen Menge (K): Zink und/oder einer Zink enthaltenden Legierung vorzugsweise verteilt auf einem Träger basierend auf vorzugsweise hochschmelzendem Metalloxid

Bei dem erfindungsgemäßen Verfahren kann vorzugsweise eine Art Chlorsilan oder ein Gemisch aus mehreren Arten von Chlorsilanen eingesetzt werden.

Bevorzugt wird bei dem erfindungsgemäßen Verfahren die auch beim Müller-Rochow-Prozess anfallenden Produkte Tetrachlorsilan, Methyltrichlorsilan und Dimethyldichlorsilan eingesetzt.

Das erfindungsgemäße Verfahren wird bei Temperaturen oberhalb des Taupunkts einer Mischung des eingesetzten Chlorsilans und Wasserstoff in der Gasphase durchgeführt, bevorzugt ist eine Durchführung bei Temperaturen oberhalb des Schmelzpunktes des Zinks, vorzugsweise wird das erfindungsgemäße Verfahren bei einer Temperatur zwischen 300°C und 800C°, bevorzugt 300°C und 600°C besonders bevorzugt 450°C und 600°C durchgeführt.

### Zink enthaltende Legierungen sind vorzugsweise Zink, Messing und/oder Bronze

Der Katalysator Zink wird vorzugsweise in Mengen von 0,1 bis 99,9 Gew.-% eingesetzt, bevorzugt in Mengen von 1 bis 50 Gew.-%, besonders bevorzugt in Mengen von 5 bis 30 Gew.-% elementares Zink bezogen auf den gesamten Feststoffkatalysator (K). Der Katalysator Zink plus Träger wird vorzugsweise auch in dem Träger eingesetzt, in dem Sinn, dass der Katalysator Zink sich in einem porösen Träger auf der inneren Oberfläche des Trägers befindet. Als Träger, vorzugsweise eine Matrix, also vorzugsweise ein Gerüst kommen vorzugsweise ein oder mehrere vorzugsweise hochschmelzende Metalloxide aus der Reihe Siliziumdioxid, Aluminiumoxid, Zinkoxid, Titandioxid, Zirconiumdioxid oder deren Mischoxide, wie vorzugsweise Alumosilikate, bevorzugt Zeolithe und deren beliebige Mischungen in Frage, wobei Siliziumdioxid bevorzugt ist und pyrogenes Siliziumdioxid besonders bevorzugt ist. Der heterogene Feststoff kann zudem auch noch vorzugsweise geringe Mengen eines oder mehrerer Promotoren aus der Reihe Kupfer, Zinn und Silizium oder diese Substanzen in beliebigen Mischungen enthalten, wobei diese in Verhältnissen von bevorzugt 0,01 bis 1, besonders bevorzugt 0,25 bis 1 bezogen auf die Menge des elementaren Zinks enthalten sind, wobei Kupfer bevorzugt ist und Zink bis zur Hälfte des Gewichts an Zink ersetzen kann, also im Verhältnis 1:1 Zink zu Promotor, vorzugsweise Kupfer vorliegt. Bevorzugt ist der Träger porös.

Die Umsetzung der Chlorsilane und Wasserstoff enthaltenden Gasmischung an dem erfindungsgemäßen Katalysator erfolgt üblicherweise bei einer gasbezogenen Katalysatorbelastung (GHSV = gas hourly space velocity) zwischen vorzugsweise 100 und 10000, bevorzugt zwischen 250 und 2500, besonders bevorzugt zwischen 500 und 1000 pro Stunde, wobei der Anteil der umzusetzenden Chlorsilane im Gasgemisch zwischen 1 und 90 Vol.-%, bevorzugt zwischen 5 und 50 und besonders bevorzugt zwischen 20 und 40 Vol.-% beträgt.

Die bei dem erfindungsgemäßen Verfahren erzeugten Hydrogensilane können auf Grund ihres niedrigen Siedepunkts vorzugsweise destillativ von den nicht umgesetzten Chlorsilanen abgetrennt werden. Bevorzugt werden die nicht umgesetzten Chlorsilane rückgeführt und erneut für eine Umsetzung eingesetzt.

Das erfindungsgemäße Verfahren kann sowohl absatzweise oder kontinuierlich durchgeführt werden.

Ein weiterer Gegenstand der Erfindung ist ein Katalysator K, wobei der Katalysator K: Zink oder eine Zink enthaltende Legierung vorzugsweise verteilt auf einem Träger basierend auf pyrogenem Siliziumdioxid enthält.

Der Katalysator K, der vorzugsweise poros ist, wird hergestellt, indem pyrogenes Siliziumdioxid in destilliertem Wasser dispergiert und metallisches Zink sowie gegebenenfalls ein oder mehrere Promotoren aus der Reihe Kupfer, Zinn und Silizium oder deren beliebige Mischungen zu der Masse hinzugegeben werden. Diese Masse wird extrudiert und vorzugsweise zu Zylindern von vorzugsweise 4 mm bis 20 mm, bevorzugt 4 mm bis 10 mm Länge und einem Durchmesser von vorzugsweise 1 mm bis 6 mm, bevorzugt 3 mm bis 6 mm getrocknet. Zudem kann die Masse auch zu jeder Form gepresst werden, wie vorzugsweise zu Pellets, Ringen oder Tabletten, und vorzugsweise auch noch eine oder mehrere Öffnungen aufweisen. Der metallische Katalysator Zink wird in Mengen von 0,1 bis 99,9 Gew.-%, bevorzugt in Mengen von 1 bis 50 Gew.-%, besonders bevorzugt in Mengen von 5 bis 30 Gew.-% bezogen auf den Feststoffkatalysator (K), also Katalysator plus Träger, zugegeben, gegebenenfalls werden Promotoren vorzugsweise aus der Reihe Kupfer, Zinn und Silizium in Verhältnissen von bevorzugt 0,01 bis 1, besonders bevorzugt 0,25 bis 1 bezogen auf die Menge des elementaren Zinks zugegeben.

Cie folgenden Beispiele sollen die vorliegende Erfindung näher erläutern, ohne ihren Umfang einzuschränken.

### Beispiel 1: Hydrodechlorierung von Tetrachlorsilan

30 g pyrogene Kieselsäure wird in 70 g destilliertem Wasser dispergiert und metallisches Zink entsprechend einem Anteil von 1 Gew.-% bezogen auf den gesamten Feststoff zu der Masse gegeben. Die Masse wird anschließend zu Strängen extrudiert und getrocknet. 10 g des trockenen Katalysators werden in einen Rohrreaktor eingebracht und zunächst 2 Stunden bei 500 °C mit Wasserstoff behandelt. Eine Mischung von 20 Vol.-% Tetrachlorsilan in Wasserstoff wird bei 450 °C entsprechend einer GHSV von 625 pro Stunde über den Katalysator geleitet und die Zusammensetzung des austretenden Produktgemischs gaschromatographisch bestimmt.

Die gebildete Menge an Trichlorsilan geht dabei deutlich über eine stöchiometrische Umsetzung von 2 Mol SiHCl3 pro Mol Zink hinaus. Bis zum Ende des Experiments nach etwa 48 h wurde eine TON (turn over number) von 225 erzielt.

### Beispiel 2: Hydrodechlorierung von Methyltrichlorsilan

30 g pyrogene Kieselsäure wird in 70 g destilliertem Wasser dispergiert und metallisches Zink entsprechend einem Anteil von 1 Gew.-% bezogen auf den gesamten Feststoffgehalt zu der Masse gegeben. Die Masse wird anschließend mit Hilfe einer Kolbenstrangpresse zu Strängen extrudiert, geschnitten und getrocknet. 10 g des trockenen Katalysators werden in einen Rohrreaktor eingebracht und zunächst 2 Stunden bei 500 °C mit Wasserstoff behandelt. Eine Mischung von 20 Vol.-% Methyltrichlorsilan in Wasserstoff wird bei 450 °C entsprechend einer GHSV von 625 pro Stunde über den Katalysator geleitet und die Zusammensetzung des austretenden Produktgemischs gaschromatographisch bestimmt.

Bei einer theoretischen stöchiometrischen Umsetzung würden pro Mol Zink nur maximal 2 Mol Dichlormethylsilan gebildet werden. Die Ergebnisse zeigen eine signifikant überstöchiometrische Bildung des Methyldichlorsilans als Reaktionsprodukt der Hydrodechlorierung von Methyltrichlorsilan, entsprechend einer TON von 120 bis zum Abschluss des Experiments nach etwa 36 h.

### Beispiel 3: Hydrodechlorierung von Methyltrichlorsilan

30 g pyrogene Kieselsäure wird in 70 g destilliertem Wasser dispergiert und katalytische aktive Metalle entsprechend der nachfolgenden Tabelle in Gew.-% bezogen auf den gesamten Feststoff zu der Masse gegeben. Die Masse wird anschließend zu Strängen extrudiert und getrocknet. 10 g des trockenen Katalysators werden in einen Rohrreaktor eingebracht und zunächst 2 Stunden bei 500 °C mit Wasserstoff behandelt. Eine Mischung von 20 Vol.-% Methyltrichlorsilan in Wasserstoff wird bei 450 °C und einer GHSV von 625 h-1 über den Katalysator geleitet und die Zusammensetzung des austretenden Produktgemischs gaschromatographisch bestimmt. Die Ergebnisse sind in Form der stationären Ausbeuten in folgender Tabelle aufgeführt.

| aktive Komponente(n) | Ausbeute |
|---|---|
| 25 Gew.-% Zn | 8,4 % |
| 50 Gew.-% Zn | 2,7 % |
| 75 Gew.-% Zn | 1,0 % |
| 12,5 Gew.-% Zn, 12,5 Gew.-% Cu | 10,0 % |

## Patentansprüche

1. Verfahren zur Herstellung von Hydrogensilanen der allgemeinen Formel
RₙCl₃₋ₙSiH
durch Umsetzung von Chlorsilanen, die ausgewählt werden aus Tetrachlorsilan und Chlorsilanen der allgemeinen Formel
RₙCl₄₋ₙSi
wobei R in beiden Formeln gleichzeitig und unabhängig voneinander ein Wasserstoffatom, ein gegebenenfalls substituierter oder unsubstituierter Kohlenwasserstoffrest mit 1 bis 18 Kohlenstoffatomen bedeutet und n die Werte von 1-3 annehmen kann, mit Wasserstoffgas in Gegenwart einer katalytischen Menge (K):
Zink und/oder einer Zink enthaltenden Legierung auf einem Träger basierend auf Metalloxid.

2. Verfahren zur Herstellung von Hydrogensilanen nach Anspruch 1, **dadurch gekennzeichnet, dass** das Metalloxid Siliziumdioxid, Aluminiumoxid, Titandioxid, Zirconiumdioxid oder deren Mischoxide ist.

3. Verfahren zur Herstellung von Hydrogensilanen nach Anspruch 2, **dadurch gekennzeichnet, dass** das Metalloxid pyrogenes Siliziumdioxid ist.

4. Verfahren zur Herstellung von Hydrogensilanen nach einem oder mehreren der Ansprüche 1 bis 3, **dadurch gekennzeichnet, dass** (K) noch zusätzlich jeweils eine Substanz aus der Gruppe Kupfer, Zinn und Silizium enthält oder deren beliebige Mischungen enthält.

5. Verfahren zur Herstellung von Hydrogensilanen nach einem oder mehreren der Ansprüche 1 bis 4, **dadurch gekennzeichnet, dass** das Zink und/oder eine Zink enthaltende Legierung in dem Träger in einer Menge von 5 Gew.% bis 30 Gew.% elementares Zink bezogen auf (K) enthalten ist.

6. Verfahren zur Herstellung von Hydrogensilanen nach einem oder mehreren der Ansprüche 1 bis 5, **dadurch gekennzeichnet, dass** das Verfahren bei 300 C° bis 600 C° durchgeführt wird

7. Katalysator, **dadurch gekennzeichnet, dass** der Katalysator (K) Zink und/oder eine Zink enthaltende Legierung auf einem Träger basierend auf pyrogenem Siliziumdioxid enthält.

8. Katalysator nach Anspruch 7, **dadurch gekennzeichnet, dass** der Katalysator (K) noch zusätzlich jeweils eine Substanz aus der Gruppe Kupfer, Zinn und Silizium enthält oder diese Substanzen in beliebigen Mischungen enthält.

## Claims

1. Process for preparing hydrogensilanes of the general formula
RnCl₃₋ₙSiH
by reacting chlorosilanes which are selected from among tetrachlorosilane and chlorosilanes of the general formula
RₙCl₄₋ₙSi
where the radicals R in both formulae are each, simultaneously and independently of one another, a hydrogen atom, an optionally substituted or unsubstituted hydrocarbon radical having from 1 to 18 carbon atoms, and n is 1-3, with hydrogen gas in the presence of a catalytic amount (K) of:
zinc and/or a zinc-containing alloy on a support based on metal oxide.

2. Process for preparing hydrogensilanes according to Claim 1, **characterized in that** the metal oxide is silicon dioxide, aluminum oxide, titanium dioxide, zirconium dioxide or a mixed oxide thereof.

3. Process for preparing hydrogensilanes according to Claim 2, **characterized in that** the metal oxide is pyrogenic silicon dioxide.

4. Process for preparing hydrogensilanes according to one or more of Claims 1 to 3, **characterized in that** (K) additionally contains in each case one substance selected from the group consisting of copper, tin and silicon or contains any mixtures thereof.

5. Process for preparing hydrogensilanes according to one or more of Claims 1 to 4, **characterized in that** the zinc and/or a zinc-containing alloy is present in the support in an amount of from 5% by weight to 30% by weight of elemental zinc based on (K).

6. Process for preparing hydrogensilanes according to one or more of Claims 1 to 5, **characterized in that** the process is carried out at from 300°C to 600°C.

7. Catalyst, **characterized in that** the catalyst (K) contains zinc and/or a zinc-containing alloy on a support based on pyrogenic silicon dioxide.

8. Catalyst according to Claim 7, **characterized in that** the catalyst (K) additionally contains in each case one substance selected from the group consisting of copper, tin and silicon or contains any mixtures of these substances.

## Revendications

1. Procédé pour la préparation d'hydrogénosilanes de formule générale
RₙCl₃₋ₙSiH
par transformation de chlorosilanes, qui sont choisis parmi le tétrachlorosilane et les chlorosilanes de formule générale
RₙCl₄₋ₙSi
R signifiant dans les deux formules, simultanément et indépendamment l'un de l'autre, un atome d'hydrogène, un radical hydrocarboné le cas échéant substitué ou non substitué, comprenant 1 à 18 atomes de carbone et n pouvant valoir 1-3, avec de l'hydrogène gazeux en présence d'une quantité catalytique (K) :
de zinc et/ou d'un alliage contenant du zinc sur un support à base d'oxyde métallique.

2. Procédé pour la préparation d'hydrogénosilanes selon la revendication 1, **caractérisé en ce que** l'oxyde métallique est le dioxyde de silicium, l'oxyde d'aluminium, le dioxyde de titane, le dioxyde de zirconium ou leurs oxydes mixtes.

3. Procédé pour la préparation d'hydrogénosilanes selon la revendication 2, **caractérisé en ce que** l'oxyde métallique est le dioxyde de silicium pyrogène.

4. Procédé pour la préparation d'hydrogénosilanes selon l'une ou plusieurs des revendications 1 à 3, **caractérisé en ce que** (K) contient en outre encore à chaque fois une substance du groupe formé par le cuivre, l'étain et le silicium ou leurs mélanges quelconques.

5. Procédé pour la préparation d'hydrogénosilanes selon l'une ou plusieurs des revendications 1 à 4, **caractérisé en ce que** le zinc et/ou un alliage contenant du zinc est contenu dans le support en une quantité de 5% en poids à 30% en poids de zinc élémentaire par rapport à (K).

6. Procédé pour la préparation d'hydrogénosilanes selon l'une ou plusieurs des revendications 1 à 5, **caractérisé en ce que** le procédé est réalisé à 300°C jusqu'à 600°C.

7. Catalyseur, **caractérisé en ce que** le catalyseur (K) contient du zinc et/ou un alliage contenant du zinc sur un support à base de dioxyde de silicium pyrogène.

8. Catalyseur selon la revendication 7, **caractérisé en ce que** le catalyseur (K) contient en outre encore à chaque fois une substance du groupe formé par le cuivre, l'étain et le silicium ou contient ces substances en des mélanges quelconques.
